(19) **Europäisches Patentamt**
**European Patent Office**
**Office européen des brevets**

(11) **EP 4 654 096 A1**

(12) **EUROPEAN PATENT APPLICATION**

(43) Date of publication:
**26.11.2025 Bulletin 2025/48**

(21) Application number: **25172611.3**

(22) Date of filing: **25.04.2025**

(51) International Patent Classification (IPC):
**G06N 20/00** (2019.01)

(52) Cooperative Patent Classification (CPC):
**G06N 20/00; G06N 3/045; G06N 3/047;
G06N 3/0475; G06N 3/08; G06N 7/01; G06N 20/10**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **22.05.2024 JP 2024083455**

(71) Applicant: **FUJITSU LIMITED
Kawasaki-shi, Kanagawa 211-8588 (JP)**

(72) Inventors:
• **ISHIDA, Yuichi
Kawasaki-shi, 211-8588 (JP)**
• **ICHIKAWA, Yuma
Kawasaki-shi, 211-8588 (JP)**
• **DOTE, Aki
Kawasaki-shi, 211-8588 (JP)**

(74) Representative: **Haseltine Lake Kempner LLP
Cheapside House
138 Cheapside
London EC2V 6BJ (GB)**

(54) **LEARNING PROGRAM, LEARNING METHOD, AND INFORMATION PROCESSING APPARATUS**

(57) Provided is a learning program causing a computer to execute a process. The process includes a first process of generating a probability distribution model by learning a probability distribution having fewer peaks than an objective probability distribution, and a second process of generating a new probability distribution model by learning a probability distribution closer to the objective probability distribution than a learned probability distribution using a parameter of a generated probability distribution model.

FIG. 4

EP 4 654 096 A1

**Description**

FIELD

A certain aspect of the present embodiments relates to a learning program, a learning method, and an information processing apparatus.

BACKGROUND

Techniques for learning a model are disclosed (see, for example, Patent Document 1: Japanese Laid-Open Patent Publication No. 2019-95600, Patent Document 2: Japanese Laid-Open Patent Publication No. 2023-129309, Patent Document 3: U.S. Laid-Open Patent Publication No. 2022/8368373, and Patent Document 4: U.S. Laid-Open Patent Publication No. 2019/0347570).

SUMMARY

However, even if a complex probability distribution is modeled by machine learning, it is difficult to generate a model with high accuracy.

In one aspect, it is desirable to provide a learning program, a learning method, and an information processing apparatus capable of learning a complex probability distribution.

According to an aspect of the present disclosure, there is provided a learning program causing a computer to execute a process, the process including: a first process of generating a probability distribution model by learning a probability distribution having fewer peaks than an objective probability distribution; and a second process of generating a new probability distribution model by learning a probability distribution closer to the objective probability distribution than a learned probability distribution using a parameter of a generated probability distribution model.

BRIEF DESCRIPTION OF THE DRAWINGS

The invention is described, by way of example only, with reference to the following drawings, in which:

FIG. 1A is a diagram illustrating a simple probability distribution.
FIG. 1B is a diagram illustrating a complex probability distribution.
FIG. 2A is a functional block diagram illustrating an overall configuration of an information processing apparatus.
FIG. 2B is a hardware configuration diagram of the information processing apparatus.
FIG. 3 is a flowchart illustrating an example of the operation of the information processing apparatus.
FIG. 4 is a diagram illustrating a learning result.

EFFECT

According to the present disclosure, it is possible to learn a complex probability distribution.

DETAILED DESCRIPTION

In the field of machine learning, techniques (generative models) for modeling unknown complex probability distributions by machine learning have been developed. In particular, a generative model $Q_\theta(x)$ characterized by a parameter $\theta$ has been developed as a mainstream. For example, RBM: Restricted Boltzmann Machine, VAE: Variational Autoencoder, GAN: Generative Adversarial Network, and the like are cited as the generation model $Q_\theta(x)$.

In the field of statistics, techniques have been proposed for sampling from a probability distribution under a situation where a functional form other than a normalization constant of the probability distribution is given. For example, techniques have been proposed for sampling from the probability distribution in Bayesian statistical modeling. Specifically, it is assumed that a functional form other than the normalization constant is given as illustrated in the following equation (1). In the following equation (1), Z is a normalization constant, making it difficult to evaluate the value of Z.

$$\mathbb{P}(x) = \frac{1}{Z}\widetilde{\mathbb{P}}(x), \quad Z = \int dx\,\widetilde{\mathbb{P}}(x) \quad (1)$$

Recently, a framework has been proposed that applies machine learning techniques to speed up sampling under a situation where a functional form P other than the normalization constant of the probability distribution is given. Specific examples will be described below.

First, learning in the case where learning data is prepared in advance (learning with data) will be described. In the learning with data, an appropriate loss function is defined for a generation model $Q_\theta(x)$ by using the learning data D of the following equation (2) prepared in advance and the function of the following equation (3) as a teacher, and the parameter $\theta$ is determined so that the loss function becomes small.

$$\mathcal{D} = \{x_\mu\}_{\mu=1}^{P} \quad (2)$$

$$\widetilde{\mathbb{P}} \quad (3)$$

For example, in Huang, L. and Wang, "Accelerated monte carlo simulations with restricted boltzmann machines" Physical Review B, 95(3): 035105, the parameter is updated by optimizing the following equation (4) using the learning data.

$$\mathbb{E}_\mathcal{D}\left\|log\widetilde{\mathbb{P}}(x) - log\mathbb{Q}_\theta(x)\right\|^2 \quad (4)$$

When the function of the above equation (3) is not obtained in the learning with data, the parameter is determined by maximizing a logarithmic likelihood of the following equation (5) using only the learning data D.

$$\mathbb{E}_\mathcal{D}\left[log\mathbb{Q}_\theta(x)\right] \quad (5)$$

Next, learning in the case where no learning data is prepared in advance (learning without data) will be described. In this case, a sample sequence (self-sample) of the following equation (6) is generated from the generation model $Q_\theta(x)$, an appropriate loss is defined from the self-sample and the function of the following equation (7), and the parameter $\theta$ is determined so that the loss function becomes small.

$$\widehat{\mathcal{D}} = \left\{\hat{x}_\mu\right\}_{\mu=1}^{\hat{P}} \quad (6)$$

$$\widetilde{\mathbb{P}}(x) \quad (7)$$

For example, in Albergo, M.S., Kanwar, G., and Shanahan, P.E.(2019), "Flow-based generative models for markov chain monte carlo in lattice field theory", Physical Review D, 100 (3): 034515, the parameter is determined to minimize a KL Divergence of the following equation (8) by using the self-sample of the above equation (6).

$$\mathbb{E}_{\widehat{\mathcal{D}}}\left[log\mathbb{Q}_\theta(x) - log\widetilde{\mathbb{P}}(x)\right] \quad (8)$$

The probability distribution to be modeled will be described, and advantages and disadvantages of the learning with data and the learning without data will be summarized.

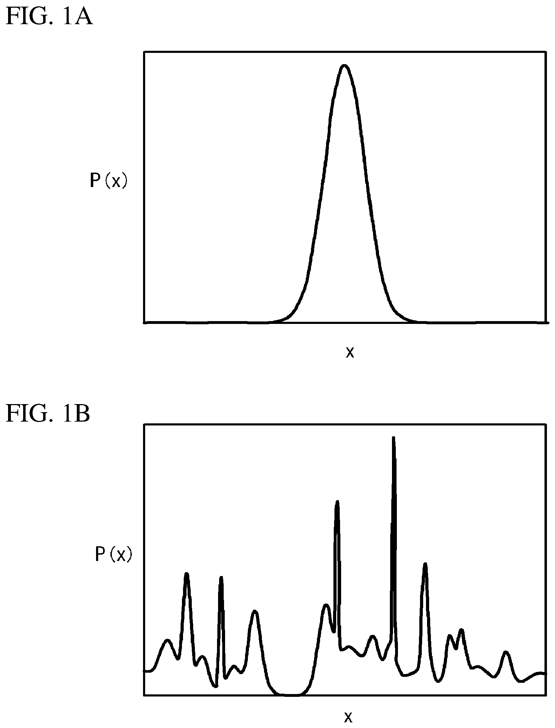

First, an image of a probability distribution to be learned will be described. The probability distribution includes a simple probability distribution having a simple distribution and a complex probability distribution having a complex distribution. FIG. 1A is a diagram illustrating a simple probability distribution. FIG. 1B is a diagram illustrating a complex probability distribution. As illustrated in FIG. 1B, the complex probability distribution is a multi-peaked probability distribution having a plurality of peaks. As illustrated in FIG. 1A, the simple probability distribution is a probability distribution having fewer peaks than the complex probability distribution. As an example, the simple probability distribution is a probability distribution that has only one peak.

In FIGs. 1A and 1B, the description is made in two dimensions for the sake of simplicity of description, but even in a three or more dimensional space, the complex probability distribution is the multi-peaked probability distribution having the plurality of peaks, and the simple probability distribution is the probability distribution having fewer peaks than the complex probability distribution.

In the learning with data, even in the complex probability distribution illustrated in FIG. 1B, if the learning data for learning a region of each peak is prepared, the advantage is that the multi-peaked distribution can be learned. On the other hand, the disadvantage is that learning data is required in advance. Another disadvantage is that the above equation (7) cannot be used well and it is difficult to output an appropriate value as the parameter θ.

Next, the learning without data has an advantage that it is not necessary to prepare the learning data in advance. On the other hand, since there is no learning data for learning the region of each peak, the learning without data has a disadvantage that it is difficult to learn anything other than the simple probability distribution as illustrated in FIG. 1A. When learning is performed on the multi-peaked distribution as illustrated in FIG. 1B by the learning without data, it is typically difficult to learn anything other than only one peak.

From the above, it is difficult to learn the complex probability distribution (for example, a multi-peaked distribution having a large number of clusters and a plurality of peaks) in both of the learning with data and the learning without data.

Therefore, in the following embodiment, an example in which a complex probability distribution can be learned will be described.

[First Embodiment]

First, the principle of the present embodiment will be described.

It is assumed that a functional form P (x) of an objective probability distribution or a functional form obtained by removing the normalization constant from the functional form P (x) is obtained. Since the obtained functional form does not have a significant effect, even when the functional form excluding the normalization constant is obtained, it is described as P (x) without distinction.

In the present embodiment, the probability distribution simpler than the objective probability distribution to be modeled is learned in advance, and the objective probability distribution is learned using the parameter of the obtained model as an initial value. However, since it is generally difficult to prepare a sufficiently simple distribution close to the objective probability distribution, this method is multi-staged so that learning is performed sequentially starting with the distribution that is easy to learn.

Specifically, a parameter $\lambda$ representing the complexity of the probability distribution is first introduced to expand the objective probability distribution P (x) to a parametrized probability distribution P (x; $\gamma$) satisfying the following conditions:

·0 < $\gamma \leq$ 1 and P (x; $\gamma$) matches the objective probability distribution for $\gamma$ = 1.
· P (x; $\gamma$') is closer to the objective probability distribution than P (x; $\gamma$) for $\gamma < \gamma$'.

Here, "closer to the objective probability distribution" means that the Wasserstein metric is small.

Next, a monotonous increasing sequence $\gamma_0 < \gamma_1 < ... < \gamma_K$ = 1 is prepared, where $\gamma_K$ = 1. In learning for P (x; $\gamma_0$), a random value is set as an initial value of the parameter. When learning is performed with the probability distribution P (x; $\gamma_K$) as an objective, the learning parameter of the model learned with the objective of P (x; $\gamma_{K-1}$) is used as the initial value.

By employing such a technique, the learning of a simpler probability distribution is started. This increases the accuracy of the machine learning even with the learning without data. Even if the probability distribution to be learned approaches the objective probability distribution and becomes complicated as a result, the accuracy of the machine learning is also improved since the parameter obtained by learning the simpler probability distribution can be used. From the above, according to the present embodiment, even if the objective probability distribution is the complex probability distribution, it is possible to perform learning with high accuracy.

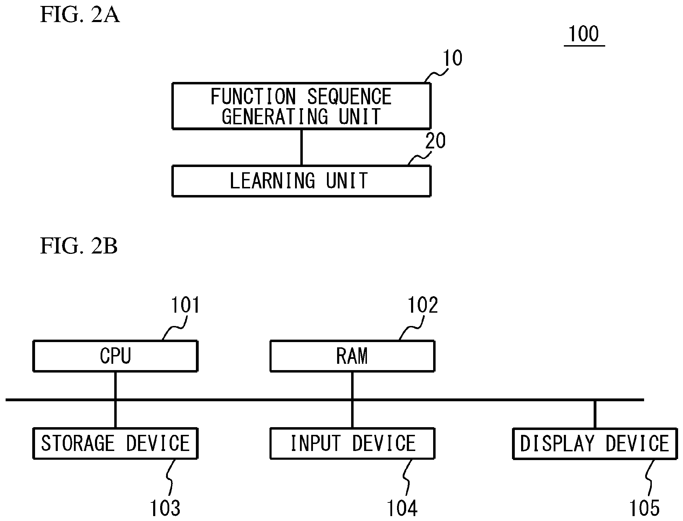

Next, the structure of the apparatus for realizing the above-described principle of solution will be described. FIG. 2A is a functional block diagram illustrating the overall configuration of an information processing apparatus 100 according to the present embodiment. The information processing apparatus 100 is a server for optimization processing, or the other devices. As illustrated in FIG. 2A, the information processing apparatus 100 functions as a function sequence generating unit 10, a learning unit 20, and the like.

FIG. 2B is a hardware configuration diagram of the information processing apparatus 100. As illustrated in FIG. 2B, the information processing apparatus 100 includes a CPU 101, a RAM 102, a storage device 103, an input device 104, a display device 105, and the like.

The CPU (Central Processing Unit) 101 is a central processing unit. The CPU 101 includes one or more cores. The RAM (Random Access Memory) 102 is a volatile memory that temporarily stores programs executed by the CPU 101, data processed by the CPU 101, and the like. The storage device 103 is a nonvolatile storage device. As the storage device 103, for example, a ROM (Read Only Memory), a solid state drive (SSD) such as a flash memory, a hard disk driven by a hard disk drive, or the like can be used. The storage device 103 stores a learning program. The input device 104 is a device for a user to input necessary information, and is a keyboard, a mouse, or the like. The display device 105 is a display device for displaying the learning result of the learning unit 20 on a screen. The CPU 101 executes the learning program, thereby implementing each unit of the information processing apparatus 100. Note that hardware such as a dedicated circuit may be used as each unit of the information processing apparatus 100.

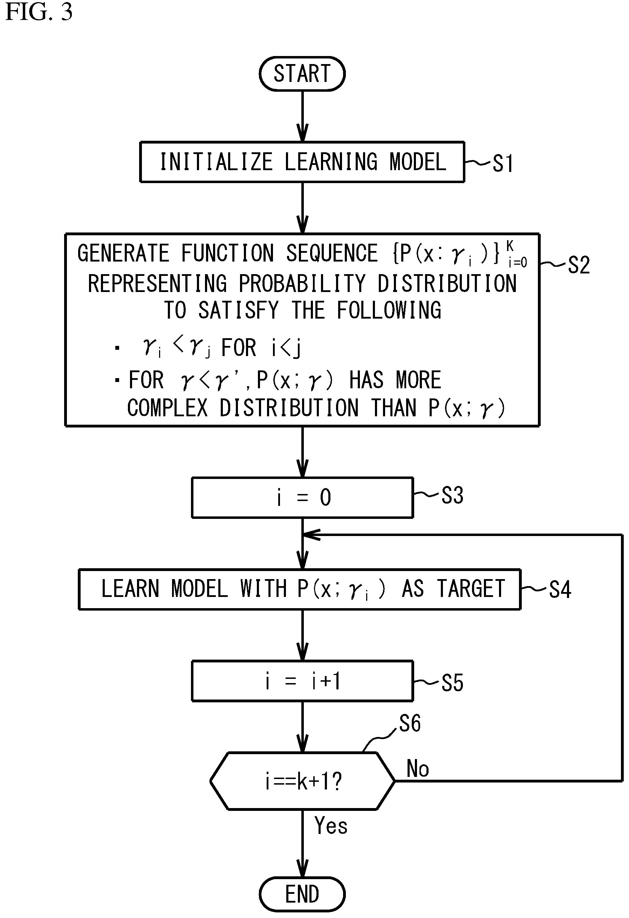

FIG. 3 is a flowchart illustrating an example of the operation of the information processing apparatus 100. As illustrated in FIG. 3, the learning unit 20 initializes a learning model (step S1).

Next, the function sequence generating unit 10 generates a function sequence representing a probability distribution and represented by the following equation (9) so as to satisfy the following (step S2).

$\cdot \gamma_i < \gamma_j$ for $i < j$.

- For $\gamma < \gamma'$, P (x; $\gamma'$) is closer to the objective probability distribution than P (x; $\gamma$). Note that i takes a value of either 0 or an integer up to K. When $0 < \gamma \leq 1$ and $\gamma = 1$, P (x; $\gamma$) matches the objective probability distribution.

$$\{P(x;\gamma_i)\}_{i=0}^{K} \quad (9)$$

Next, the learning unit 20 sets i = 0 (step S3). This initializes the value of i.

Next, the learning unit 20 learns a model with P (x; $\gamma i$) as a target (step S4).

Next, the learning unit 20 increases the value of i by 1 by setting i as i = i + 1 (step S5).

Next, the learning unit 20 determines whether the value of i is k + 1 by determining whether i = = k + 1 is satisfied (step S6). This makes it possible to determine whether the learning of the model has been completed for all $\gamma$ values from $\gamma_0$ to $\gamma_K$.

If the determination result in step S6 is determined as "No", the process is executed again from step S4. If the determination result in step S6 is determined as "Yes", the execution of the flowchart ends. The display device 105 displays the learning result.

Next, a more specific example will be described. As the probability distribution P (x; $\gamma$), an extended distribution as illustrated in the following equation (10) can be used.

$$\mathbb{P}(x;\gamma) \equiv \frac{\mathbb{P}^{\gamma}(x)}{Z(\gamma)}, \quad Z(\gamma) = \int dx\, \mathbb{P}^{\gamma}(x) \quad (10)$$

Next, consider a situation where a sample sequence with parameters $\gamma_0 < \gamma_1 < ... < \gamma_K = 1$ is given. First, learning is performed on data according to P (x; $\gamma_0$), and then learning is performed on data according to P (x; $\gamma_1$) using the obtained learning parameter as an initial value. Thereafter, similarly, learning is performed on data according to P (x; $\gamma_k$) using a learning parameter obtained by performing learning on data according to P (x; $\gamma_{k-1}$) as an initial value.

Next, another example will be described. A probability distribution S that is easy to sample is introduced into the probability distribution P (x; $\gamma$), and an extended distribution as illustrated in the following equation (11) is considered.

$$\mathbb{P}(x;\gamma) \equiv \frac{\mathbb{P}^{\gamma}(x)\mathbb{S}^{1-\gamma}(x)}{Z(\gamma)}, \quad Z(\gamma) = \int dx\, \mathbb{P}^{\gamma}(x)S^{1-\gamma}(x) \quad (11)$$

Next, consider a situation where a sample sequence with parameters $\gamma_0 < \gamma_1 < ... < \gamma_K = 1$ is given. In addition, "S" in the above equation (11) is a uniform distribution, a Bernoulli distribution, a normal distribution, or the like. First, learning is performed on data according to P (x; $\gamma_0$), and then learning is performed on data according to P (x; $\gamma_1$) using the obtained learning parameter as an initial value. Thereafter, similarly, learning is performed on data according to P (x; $\gamma_k$) using a learning parameter obtained by performing learning on data according to P (x; $\gamma_{k-1}$) as an initial value.

The following describes the verification of the effect of the present embodiment.

PT: Parallel Tempering is performed on Gset G1 which is a benchmark problem of MCP: Max Cut Problem, thereby preparing the learning data. In PT, a MCMC (Markov Chain Monte Carlo) method is operated using the Boltzmann distribution at different temperatures, and the state is exchanged between different temperatures at a constant frequency. This allows efficient sampling at a lower temperature than in the conventional MCMC method.

Then, a restricted Boltzmann machine (RBM) is trained with the learning with data. A loss function MSE ($\theta$) in this case is a mean square error between the energy of the RBM and the energy of the MCP, as illustrated in the following equation (12). In addition, θ is a learning parameter, β is an inverse temperature, D is learning data, $F_\theta$ (x) is the energy of the RBM, and E (x) is the energy of the MCP.

$$MSE(\theta) = \frac{1}{|\mathcal{D}|} \sum_{x \in \mathcal{D}} (F_\theta(x) - \beta E(x))^2 \quad (12)$$

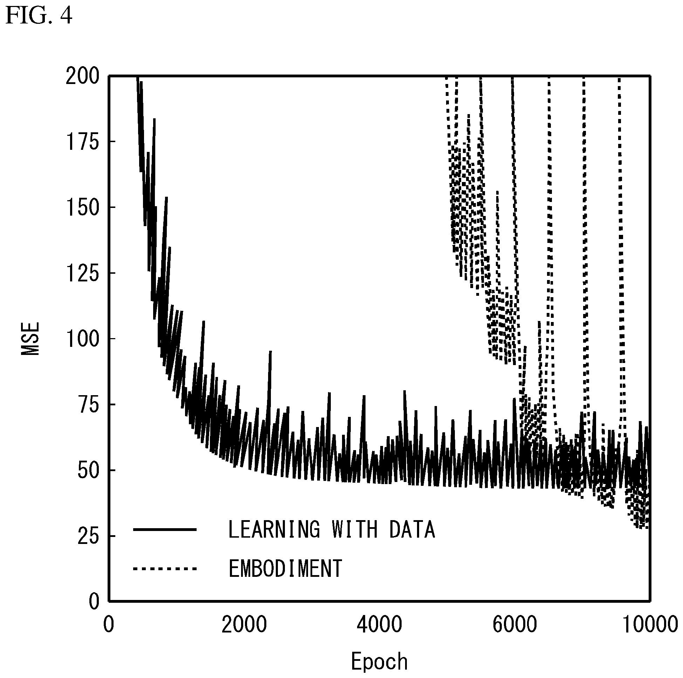

FIG. 4 is a diagram illustrating a learning result. In FIG. 4, the horizontal axis represents the number of epochs, and the vertical axis represents an MSE. In FIG. 4, the result of general learning with data is also illustrated. In the learning with data, 8000 epochs were learned using only the learning data obtained at the lowest temperature. In the above PT, since the Boltzmann distribution generally becomes more complicated as the temperature decreases, by executing the PT so that the objective probability distribution becomes a minimum temperature, it is possible to prepare simple to complex distributions to approach the objective distribution, and to acquire the learning data at each temperature. In the method according to the present embodiment, the learning was performed while the value of γ is made close to 1 for 500 epochs in order from a maximum temperature. Specifically, a total of 16 temperatures were prepared, and the minimum temperature was set to 0.5 and the maximum temperature was set to 4.0. An intermediate temperature was determined by the following equation (13) with N = 16.

$$T_i = T_1 exp \left( \frac{i-1}{N-1} log \frac{T_N}{T_1} \right) \text{ for i=1,...,N} \quad (13)$$

As illustrated in FIG. 4, the MSE is 49.4 in the general learning with data, whereas it is 37.4 in the method according to the present embodiment. From this result, it is understood that the performance is improved in the method according to the present embodiment.

In the above embodiment, the learning at $\gamma_0$ corresponds to a first process of generating a probability distribution model by learning a probability distribution having a distribution simpler than an objective probability distribution. The learning at $\gamma_1... \gamma_K$ corresponds to a second process of generating a new probability distribution model by learning a probability distribution closer to the objective probability distribution than a learned probability distribution using a parameter of a generated probability distribution model. The learning unit 20 corresponds to a learning unit which executes a first process for generating a probability distribution model by learning a probability distribution having a distribution simpler than an objective probability distribution, and a second process for generating a new probability distribution model by learning a probability distribution closer to the objective probability distribution than a learned probability distribution by using a parameter of a generated probability distribution model.

Although the embodiment of the present invention is described in detail, the present invention is not limited to the specifically described embodiments and variations but other embodiments and variations may be made without departing from the scope of the claimed invention.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

**Claims**

1. A learning program causing a computer to execute a process, the process comprising:

   a first process of generating a probability distribution model by learning a probability distribution having fewer peaks than an objective probability distribution; and
   a second process of generating a new probability distribution model by learning a probability distribution closer to the objective probability distribution than a learned probability distribution using a parameter of a generated probability distribution model.

2. The learning program according to claim 1, wherein

   a distribution satisfying $0 < \gamma \le 1$, $P(x;\gamma) \equiv P^{\gamma}(x)/Z(\gamma)$, and $Z(\gamma) = \int dx\, P^{\gamma}(x)$ is prepared for $P(x)$ representing the objective probability distribution, and
   a value of $\gamma$ in the second process is made larger than a value of $\gamma$ in the first process.

3. The learning program according to claim 1, wherein
   the computer is caused to repeatedly execute the second process two or more times.

4. The learning program according to claim 3, wherein

   a distribution satisfying $0 < \gamma \le 1$, $P(x;\gamma) \equiv P^{\gamma}(x)/Z(\gamma)$, and $Z(\gamma) = \int dx\, P^{\gamma}(x)$ is prepared for $P(x)$ representing the objective probability distribution,
   a value of $\gamma$ in the second process is made larger than a value of $\gamma$ in the first process, and
   the value of $\gamma$ is made larger when the second process is repeated.

5. The learning program according to claim 1, wherein

   a distribution of $0 < \gamma \le 1$, $P(x;\gamma) \equiv P^{\gamma}(x)\,S^{1-\gamma}(x)/Z(\gamma)$, $Z(y) = \int dx\, P^{\gamma}(x)\,S^{1-\gamma}(x)$ is prepared for $P(x)$ representing the objective probability distribution, and
   a value of $\gamma$ in the second process is made larger than a value of $\gamma$ in the first process.

6. The learning program according to claim 1, wherein

   the computer is caused to repeatedly execute the second process two or more times,
   a distribution of $0 < \gamma \le 1$, $P(x;\gamma) \equiv P^{\gamma}(x)/Z(\gamma)$, $Z(\gamma) = \int dx\, P^{\gamma}(x)\,S^{1-\gamma}(x)$ is prepared for $P(x)$ representing the objective probability distribution,
   a value of $\gamma$ in the second process is made larger than a value of $\gamma$ in the first process, and
   the value of $\gamma$ is made larger when the second process is repeated.

7. A learning method causing a computer to execute a process, the process comprising:

   a first process of generating a probability distribution model by learning a probability distribution having fewer peaks than a objective probability distribution; and
   a second process of generating a new probability distribution model by learning a probability distribution closer to the objective probability distribution than a learned probability distribution using a parameter of a generated probability distribution model.

8. The learning method according to claim 7, wherein

   a distribution satisfying $0 < \gamma \le 1$, $P(x;\gamma) \equiv P^{\gamma}(x)/Z(\gamma)$, and $Z(\gamma) = \int dx\, P^{\gamma}(x)$ is prepared for $P(x)$ representing the objective probability distribution, and
   a value of $\gamma$ in the second process is made larger than a value of $\gamma$ in the first process.

9. The learning method according to claim 7, wherein
   the computer is caused to repeatedly execute the second process two or more times.

10. The learning method according to claim 9, wherein

    a distribution satisfying $0 < \gamma \le 1$, $P(x;\gamma) \equiv P^{\gamma}(x)/Z(\gamma)$, and $Z(\gamma) = \int dx\, P^{\gamma}(x)$ is prepared for $P(x)$ representing the objective probability distribution,
    a value of $\gamma$ in the second process is made larger than a value of $\gamma$ in the first process, and
    the value of $\gamma$ is made larger when the second process is repeated.

11. The learning method according to claim 7, wherein

    a distribution of $0 < \gamma \le 1$, $P(x;\gamma) \equiv P^{\gamma}(x)\,S^{1-\gamma}(x)/Z(\gamma)$, $Z(\gamma) = \int dx\, P^{\gamma}(x)\,S^{1-\gamma}(x)$ is prepared for $P(x)$ representing the objective probability distribution, and

a value of $\gamma$ in the second process is made larger than a value of $\gamma$ in the first process.

12. The learning method according to claim 7, wherein

the computer is caused to repeatedly execute the second process two or more times,
a distribution of $0 < \gamma \le 1$, $P(x; \gamma) \equiv P^{\gamma}(x) / Z(\gamma)$, $Z(\gamma) = \int dx\, P^{\gamma}(x)\, S^{1-\gamma}(x)$ is prepared for $P(x)$ representing the objective probability distribution,
a value of $\gamma$ in the second process is made larger than a value of $\gamma$ in the first process, and
the value of $\gamma$ is made larger when the second process is repeated.

13. An information processing apparatus (100) comprising:
a learning unit (20) configured to:

generate, as a first process, a probability distribution model by learning a probability distribution having fewer peaks than a objective probability distribution; and
generate, as a second process, a new probability distribution model by learning a probability distribution closer to the objective probability distribution than a learned probability distribution using a parameter of a generated probability distribution model.

14. The information processing apparatus according to claim 13, wherein
the learning unit prepares a distribution satisfying $0 < \gamma \le 1$, $P(x; \gamma) \equiv P^{\gamma}(x) / Z(\gamma)$, and $Z(\gamma) = \int dx\, P^{\gamma}(x)$ for $P(x)$ representing the objective probability distribution, and makes a value of $\gamma$ in the second process larger than a value of $\gamma$ in the first process.

15. The information processing apparatus according to claim 13, wherein
the learning unit repeatedly executes the second process two or more times.

FIG. 1A

P (x)

x

FIG. 1B

P (x)

x

FIG. 2A

100

FUNCTION SEQUENCE
GENERATING UNIT — 10

LEARNING UNIT — 20

FIG. 2B

101
CPU

102
RAM

STORAGE DEVICE
103

INPUT DEVICE
104

DISPLAY DEVICE
105

FIG. 3

```
            ( START )
                |
                v
  +----------------------------+
  | INITIALIZE LEARNING MODEL  |~S1
  +----------------------------+
                |
                v
  +--------------------------------------------------+
  | GENERATE FUNCTION SEQUENCE {P(x; γᵢ)}ᵢ₌₀ᴷ        |~S2
  | REPRESENTING PROBABILITY DISTRIBUTION            |
  |         TO SATISFY THE FOLLOWING                 |
  |   · γᵢ < γⱼ FOR i<j                              |
  |   · FOR γ<γ', P(x;γ) HAS MORE                    |
  |     COMPLEX DISTRIBUTION THAN P(x;γ)             |
  +--------------------------------------------------+
                |
                v
        +----------------+
        |     i = 0      |~S3
        +----------------+
                |
                v
  +----------------------------------+
  | LEARN MODEL WITH P(x;γᵢ) AS TARGET |~S4
  +----------------------------------+
                |
                v
        +----------------+
        |    i = i+1     |~S5
        +----------------+
                |           S6
                v
        < i==k+1? >----No----+
                |
               Yes
                |
                v
            ( END )
```

INITIALIZE LEARNING MODEL  ~S1

GENERATE FUNCTION SEQUENCE $\{P(x; \gamma_i)\}_{i=0}^{K}$ REPRESENTING PROBABILITY DISTRIBUTION TO SATISFY THE FOLLOWING  ~S2

· $\gamma_i < \gamma_j$ FOR $i<j$

· FOR $\gamma < \gamma'$, $P(x;\gamma)$ HAS MORE COMPLEX DISTRIBUTION THAN $P(x;\gamma)$

i = 0  ~S3

LEARN MODEL WITH $P(x;\gamma_i)$ AS TARGET  ~S4

i = i+1  ~S5

S6

i==k+1?   No

Yes

FIG. 4

**EUROPEAN SEARCH REPORT**

Application Number

EP 25 17 2611

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/220733 A1 (FISHER CHARLES KENNETH [US] ET AL) 18 July 2019 (2019-07-18) * paragraphs [0002], [0049], [0060]; figure 6 * | 1-15 | INV. G06N20/00 |

-----

TECHNICAL FIELDS SEARCHED (IPC)

G06N

The present search report has been drawn up for all claims

| Place of search | Date of completion of the search | Examiner |
|---|---|---|
| Munich | 7 October 2025 | Thielemann, Benedikt |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

EP 4 654 096 A1

## ANNEX TO THE EUROPEAN SEARCH REPORT
## ON EUROPEAN PATENT APPLICATION NO.

EP 25 17 2611

07-10-2025

| Patent document cited in search report | Publication date | Patent family member(s) | Publication date |
|---|---|---|---|
| US 2019220733 A1 | 18-07-2019 | CA 3088204 A1 | 25-07-2019 |
| | | CN 111758108 A | 09-10-2020 |
| | | EP 3740908 A1 | 25-11-2020 |
| | | JP 7305656 B2 | 10-07-2023 |
| | | JP 2021511584 A | 06-05-2021 |
| | | JP 2022031730 A | 22-02-2022 |
| | | US 2019220733 A1 | 18-07-2019 |
| | | WO 2019143737 A1 | 25-07-2019 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019095600 A
- JP 2023129309 A
- US 20228368373 A
- US 20190347570 A

**Non-patent literature cited in the description**

- **HUANG, L.** ; **WANG**. Accelerated monte carlo simulations with restricted boltzmann machines. *Physical Review B*, vol. 95 (3), 035105
- **ALBERGO, M.S.** ; **KANWAR, G.** ; **SHANAHAN, P.E.** Flow-based generative models for markov chain monte carlo in lattice field theory. *Physical Review D*, 2019, vol. 100 (3), 034515